# EUROPEAN PATENT SPECIFICATION

(11) **EP 3 494 048 B1**
(45) Date of publication and mention of the grant of the patent: **23.09.2020**
(21) Application number: 17748795.6
(22) Date of filing: 07.08.2017
(51) Int. Cl.: B64D 47/08, G03B 15/00, G05D 1/00, G05D 1/08

(54) **UNMANNED VEHICLE**
UNBEMANNTES FAHRZEUG
VÉHICULE SANS PILOTE

(30) Priority: 05.08.2016 GB 201613503
(43) Date of publication of application: 12.06.2019
(73) Proprietor: Blue Bear Systems Research Limited, Oakley, Bedfordshire MK43 7TA (GB)
(72) Inventor: SNOOK, Michael, Alexander, Bedford Bedfordshire MK44 1PQ (GB)
(74) Representative: HGF
(86) International application number: PCT/EP2017/069964
(87) International publication number: WO 2018/024915

(56) References cited:
- WO-A2-2004/067432
- GB-A- 2 161 774
- US-A1- 2014 231 578

## Description

Embodiments relate to unmanned vehicles (UVs) such as, for example, unmanned air vehicles (UAVs), unmanned surface vehicles (USVs) and unmanned Ground vehicles (UGVs)

In conventional UVs using traditional two axis forward mounted gimbals, the camera tends to be attached to the tilt drive, with the other rotational axis being parallel to either the UV's roll or yaw axis. The former configuration ensures a consistent aerodynamic profile during operation but is complicated for image orientation. The latter maintains image orientation but at the expense of a physical roll axis due to gimbal size and weight constraints.

Furthermore, during vehicle manoeuvring, sensors used during flight have their attitudes changed. Such manoeuvring can adversely affect the readings from those sensors, which may lead to the flight control system operating using anomalous or otherwise noisy or inaccurate data. Consider, for example, an airspeed monitoring sensor, associated with a pitot that is located on a tail, during a high alpha manoeuvre, or other manoeuvre, that creates turbulent airflow over that pitot, the airspeed sensor will not give an accurate indication of airspeed. Consequently, the flight control system may unnecessarily take action to address any perceived loss or gain of airspeed.

Document WO2004/067432 discloses methods and apparatuses for stabilizing payloads, including airborne cameras.

### SUMMARY

Embodiments of the invention are set out in the appended claims.

Suitably, embodiments provide a method for controlling a vehicle comprising a body, a neck, a head and a vehicle control system; in which the body comprises vehicle control planes/vehicle control actuators for influencing vehicle movement; the vehicle control actuators being responsive to the vehicle control system, the method comprising measuring, using one or more than one sensor housed within the head, a characteristic associated with the vehicle, the vehicle control system being responsive to the one or more than one sensor, and controlling a first stabilisation mechanism of the neck, using a vehicle stabilisation system responsive to the one or more than one sensor, to maintain a head attitude decoupled from, or independent of, variations in body attitude.

Embodiments provide a vehicle comprising a body, a neck, a head and a vehicle control system; in which the body comprises vehicle control planes/vehicle control actuators for influencing vehicle movement; the vehicle control actuators being responsive to the vehicle control system, the head comprises one or more than one sensor for measuring a characteristic associated with the vehicle, the vehicle control system being responsive to the one or more than one sensor, the neck is coupled between the body and the head in which the neck comprises a first stabilisation mechanism arranged, responsive to a vehicle stabilisation system responsive to the one or more than one sensor, to maintain a head attitude decoupled from or independently of variations in body attitude.

Aspects, features and advantages of embodiments will become apparent from the following description given with reference to the accompanying drawings in which like numerals denote like elements.
Fig. 1 illustrates a vehicle inertial frame.
Fig. 2 shows a pair of known UAVs with gimbals.
Fig. 3 depicts a vehicle according to embodiments.
Fig. 4 illustrates a head according to embodiments.
Fig. 5 depicts schematically a neck according to embodiments.
Figs. 6A to 6F show a neck and head mount according to embodiments.
Figs. 7A to 7B illustrate the head and neck according to embodiments.
Fig. 8 depicts schematically a neck according to embodiments.
Figs. 9A to 9F illustrate a neck according to embodiments.
Fig. 10 depicts a vehicle according to the embodiments.
Figs. 11A to 11B illustrate a head with sensors according to embodiments.
Fig. 12 shows sensor integration according to embodiments.
Fig.13 illustrates control software according to embodiments.
Fig. 14 illustrates system resources according to embodiments.

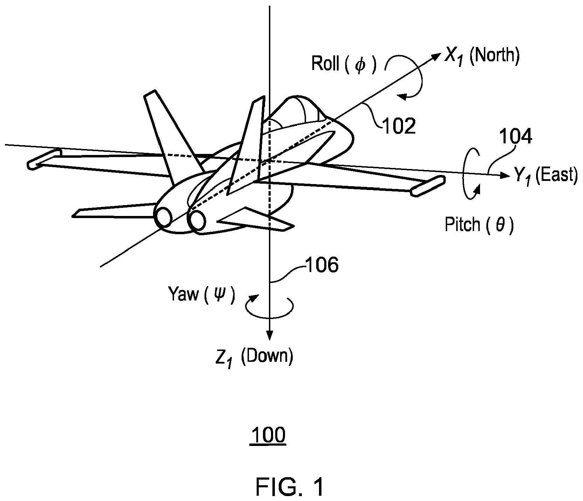

Figure 1 shows an inertial frame 100. The inertial frame 100 comprises three mutually orthogonal axes 102 to 106; namely, an x-axis 102, a y-axis 104 and a z-axis 106, otherwise known as roll, pitch and yaw axes respectively.

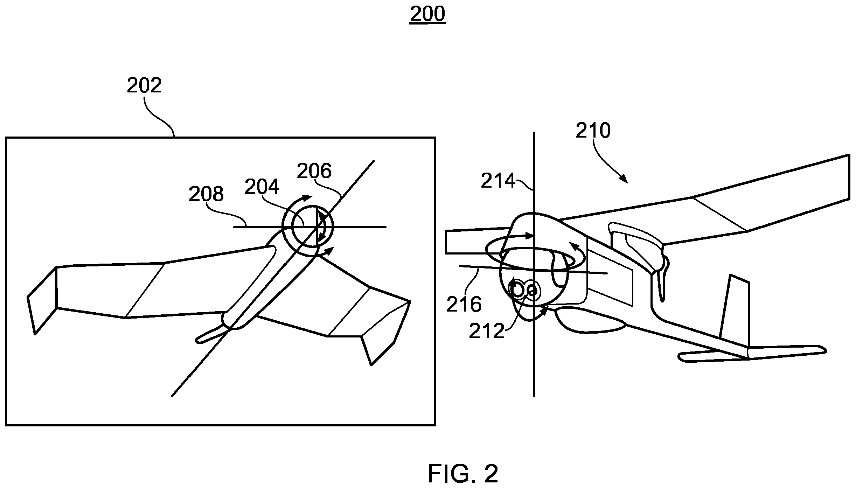

Figure 2 depicts view 200 of a pair of UAVs with gimbals. The pair of UAVs comprises a first UAV 202. The first UAV 202 bears a respective gimbal 204. The gimbal 204 can be rotated about a pair of mutually orthogonal axes 206 and 208. A first axis 206 is oriented longitudinally parallel to a roll axis 102 of the first UAV 202. A second axis 208 of the pair of mutually orthogonal axes is oriented parallel to the pitch axis 104 in a plane parallel to the x-y plane.

The pair of UAVs comprises a second UAV 210. The second UAV 210 bears a respective gimbal 212. The gimbal 212 can be rotated about a pair of mutually orthogonal axes 214 and 216. A first axis 214 is oriented parallel to a yaw axis 106 of the second UAV 210. A second axis 216 of the pair of mutually orthogonal axes is oriented parallel to the pitch axis 104 and within a plane parallel to the x-y plane.

The first 202 and second 210 UAVs potentially suffer from the above problems.

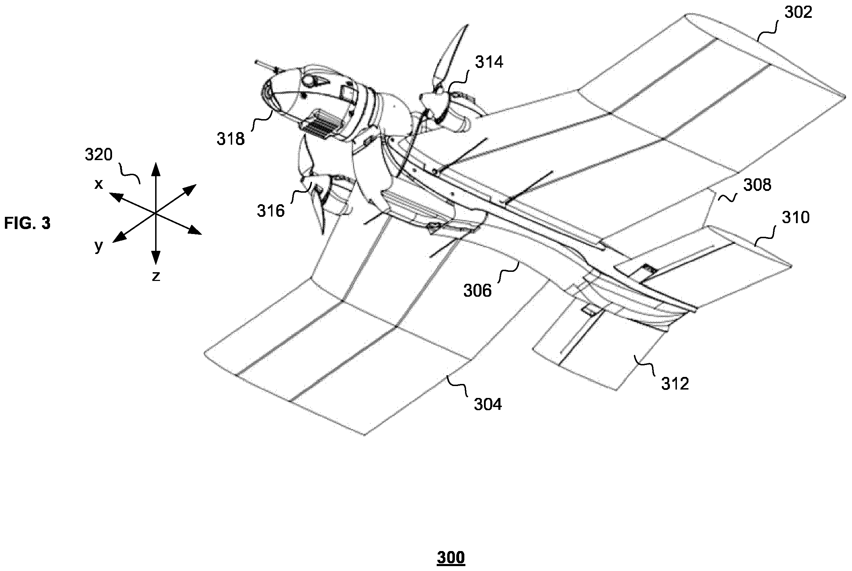

Figure 3 depicts shows a first UAV 300 according to embodiments. The UAV 300 comprises left 302 and right 304 wings disposed either side of a central body 306. The central body 306 also bears a tail 308 as well as left 310 and right 312 ailerons. The UAV 300 has a means of propulsion, which, in the illustrated embodiment, comprises a pair of propellers 314 and 316 driven by respective engines (not shown).

The UAV 300 comprises a head 318. The head 318 is stabilised relative to the remainder of the UAV 300. The head 318 can be arranged to maintain a given attitude relative to an external frame of reference 320 notwithstanding changes in the UAV's attitude.

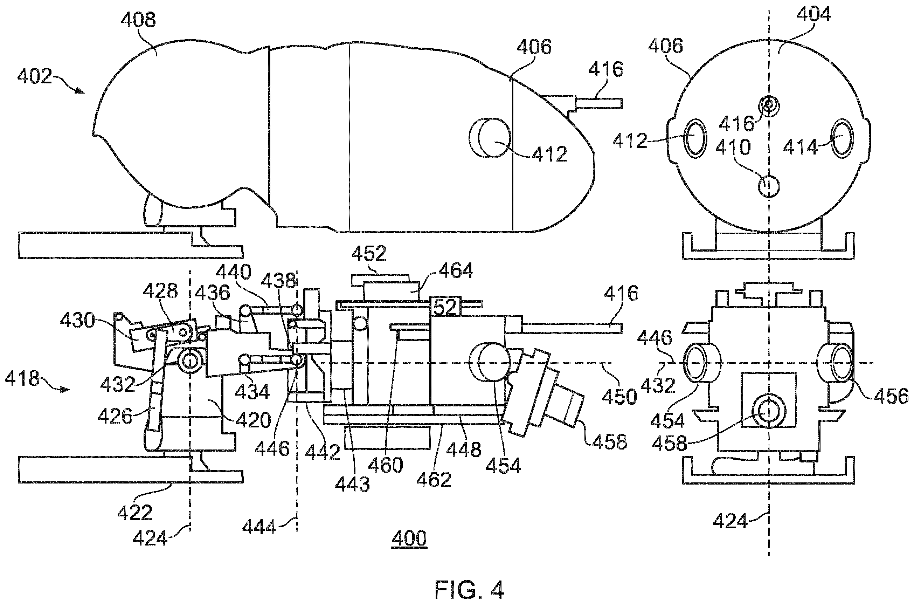

Figure 4 schematically illustrates a view 400 of the head 318. A first view 402 depicts the housing for the head 318. An embodiment of the housing comprises left 404 and right 406 face housing portions and a neck housing portion 408.

Embodiments can be realised in which the face housing portions 404 and 406 are arranged to bear one or more than one aperture for one or more than one respective sensor (not shown). In the embodiment depicted, three such apertures 410 to 414 are shown. The three apertures 410 to 414 can be arranged to bear vision sensors. In the embodiment illustrated, the three apertures 410 to 414 can be arranged to bear respective cameras. Embodiments can, alternatively or additionally, be arranged to support one or more than one further sensor. In the illustrated embodiment, such a further sensor can comprise an airspeed sensor 416 is also carried by the head 318. The air speed sensor 416 can be realised using a differential air speed sensor and an associated pitot.

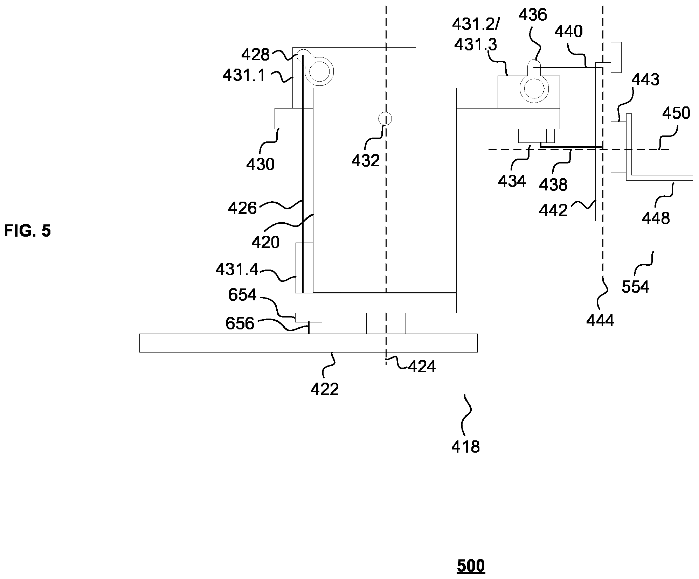

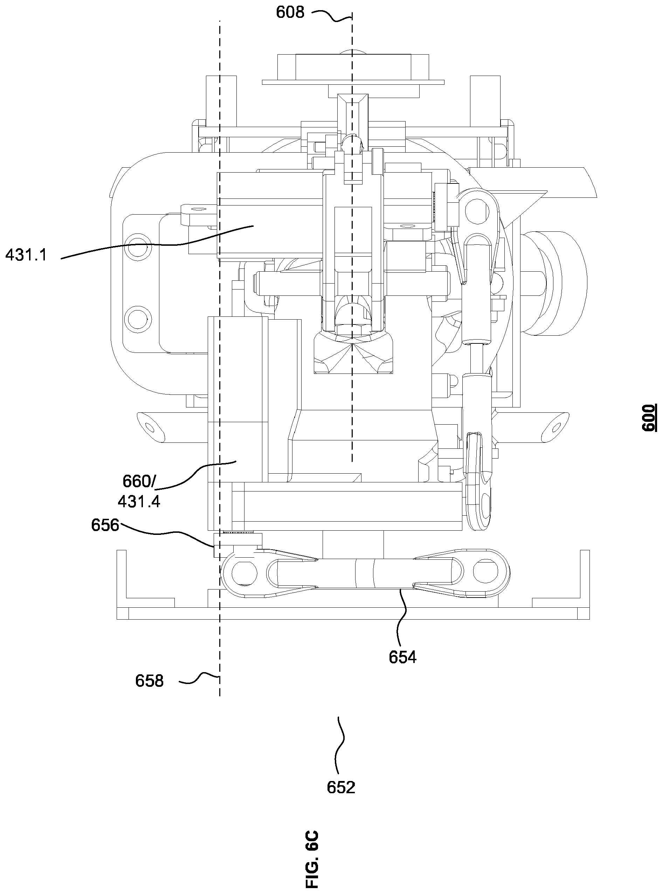

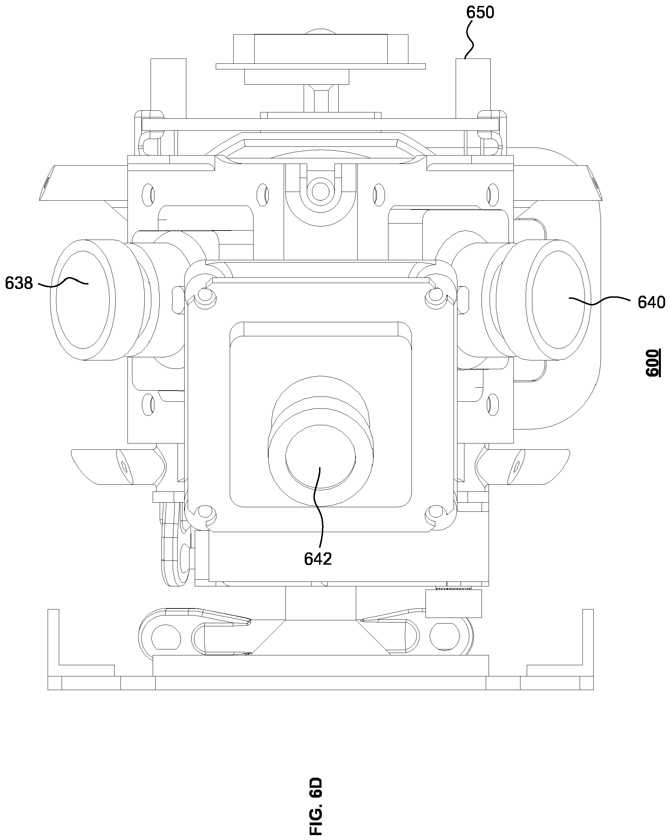

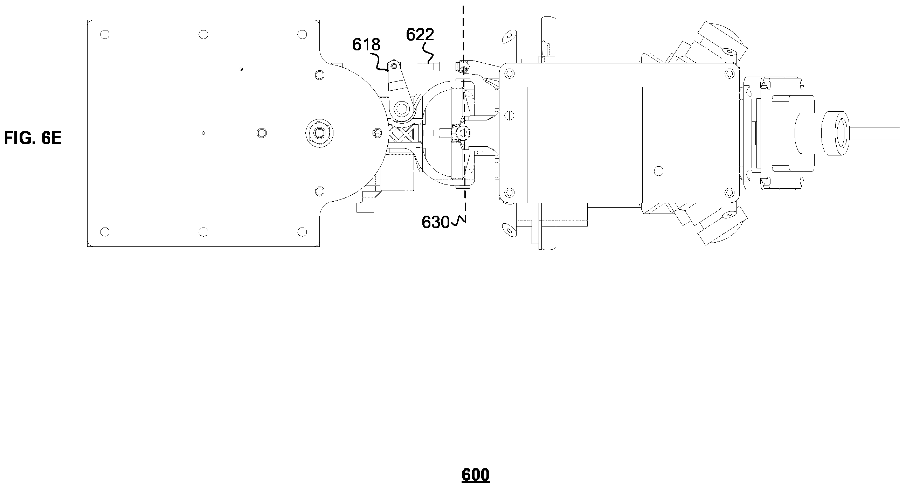

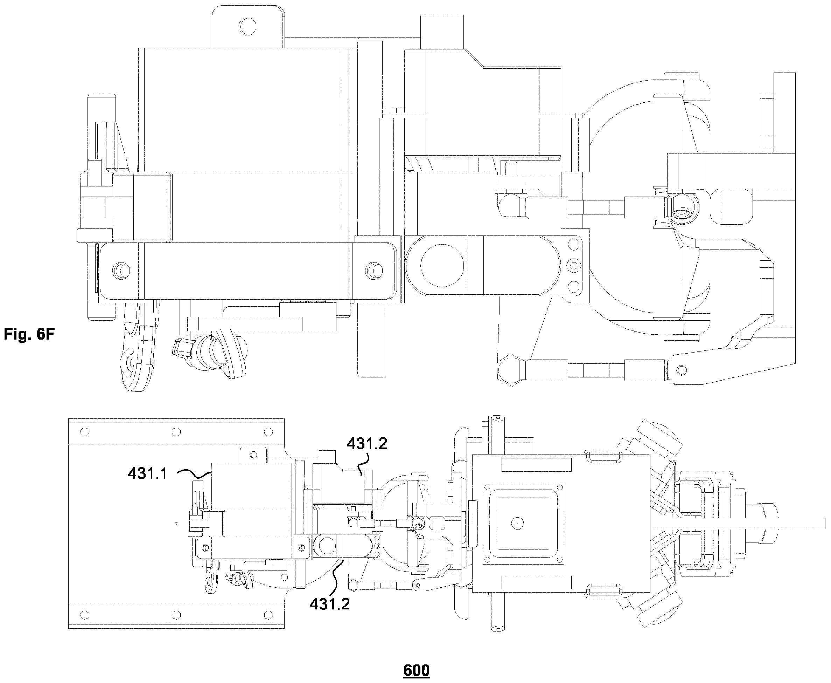

The head 318 comprises a neck 418 to be housed within the neck housing portion 408. The neck 418 comprises a pedestal 420 mounted on a mount or plate 422. The pedestal 420 is rotatable about a pedestal axis 424. The pedestal 420 is pivotally coupled, via a pedestal link 426 and a rotatable arm 428, to a transducer bearing frame 430. The transducer bearing frame 430 is arranged to carry a respective transducer (431.1 shown in figure 5) that drives the rotatable arm 428 to move the head 318 in the xz-plane about a respective axis 432 that is substantially parallel to the xy-plane. Embodiments can be realised in which the transducer 431.1 is a thin profile servo, which is relatively shallow and has a high torque output. It can be appreciated that the pedestal link 426 is coupled to an anchor position on the pedestal 420. Embodiments can be realised in which the anchor is disposed towards the bottom of the pedestal. It will be appreciated that rotation of the rotatable arm 428 moves the transducer bearing frame 430 with respect to the pedestal 420. The pedestal 420 is rotatable about the pedestal axis 424 via a respective transducer (431.4 as shown in figure 5 or 660 as shown in figure 6C) and associated link such as, for example, link 654.

The transducer bearing frame 430 is also arranged to carry one or more further transducers. In the embodiment shown, the transducer bearing frame 430 is arranged to carry two further transducers (431.2 and 431.3 shown in figure 5). Embodiments can be realised in which the transducers 431.2 and 431.3 are think profile servos, which are relatively shallow and that have a high torque output.

The two further transducers are coupled, via respective rotatable arms 434 and 436 and respective links 438 and 440 to a roll actuator bearing frame 442. The roll actuator bearing frame 442 carries a roll actuator 443 such as, for example, a low profile servo. Embodiments can be realised in which the roll actuator 443 is a piezoelectric roll actuator. A first link 438 of the respective links 438 and 440 is arranged to rotate the roll actuator bearing frame 442 about a respective axis 444. The respective axis 444 can be parallel to the z axis 106. A second link 440 of the respective links 438 and 440 is arranged to rotate the roll actuator bearing frame 442 about a respective axis 446. The respective axis can be parallel to the y axis 104. In the embodiment illustrated the two axes 432 and 446 are coplanar. The two axes 432 and 446 can be coplanar within a plane parallel to the xy-plane.

The roll actuator 443 is arranged to carry a sensor mounting frame 448. The roll actuator 443 is arranged to pivot the sensor mounting frame 448 about a roll actuator axis 450. The sensor mounting frame 448 is arranged to carry one or more than one sensor. The one or more than one sensor can comprise at least one or more of a Global Positioning System (GPS) unit 452, one or a number of vision sensors 454 to 458, an inertial measurement unit (IMU) 460, one or more processors 462 such as, for example, one or more vision processors, an air data sensor 416 such as, for example, a differential air data sensor and a sensor integration board 464 taken jointly and severally in any and all permutations.

Embodiments can be realised in which the transducers 431.1 to 431.4 are operable cooperatively or in a complementary manner. For example, transducers 431.3 and 431.4, which control movement about respective axes 444 and 424, can be operated in a complementary manner such that rotation about one axis of the axes via one transducer is mirrored by a complementary rotation about the other axis of the axes via the other transducer. The combination of the complementary rotations results in a linear translation of the head to the left or right. The complementary rotations can also maintain the head orientation in a given direction notwithstanding the rotations. Additionally, or alternatively, transducers 431.1 and 431.2, which control movement about respective axes 432 and 446, can be operated in a complementary manner such that rotation about one axis of the axes via one transducer is mirrored by a complementary rotation about the other axis of the axes via the other transducer. The combination of the complementary rotations results in a linear translation of the head upwards or downwards. The complementary rotations can also maintain the head orientation in a given direction notwithstanding the rotations. Therefore, linear translations can be realised using the respective combinations of the transducers 431.1 to 431.4. Such linear translations can be orthogonal linear translations.

Referring to figure 5, there is shown a schematic view 500 of the neck 418. Common references numerals used in figures 4 and 5 refer to the same entities.

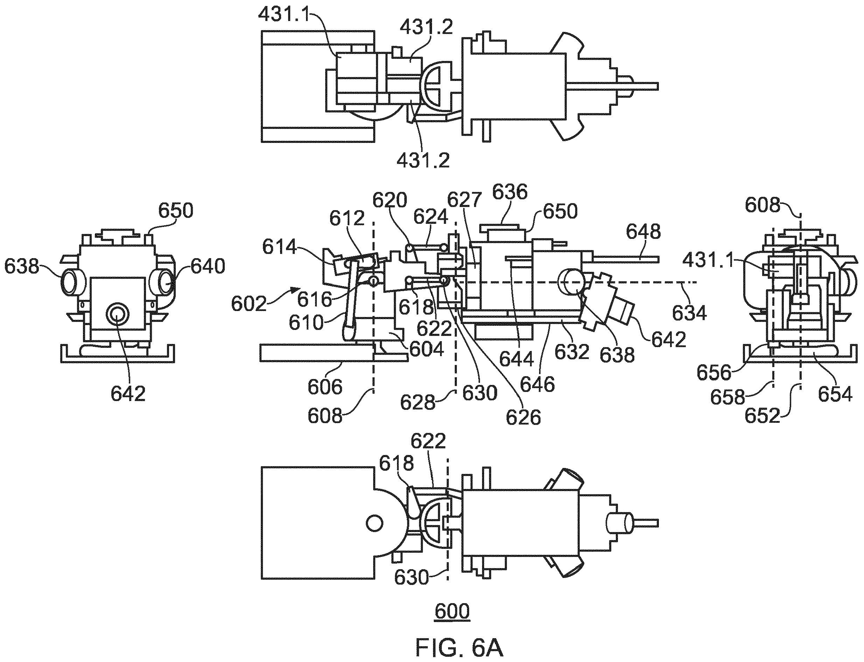

Referring to figures 6A to 6F, there are shown a number of views 600 of a neck according to an embodiment. The neck 602 can be an embodiment of any other neck described herein or as shown in or described with reference to figure 4. The neck 602 comprises a pedestal 604 mounted on a mount or plate 606. The pedestal 604 is rotatable about a pedestal axis 608. The pedestal 604 is pivotally coupled, via a pedestal link 610 and a rotatable arm 612, to a transducer bearing frame 614. The transducer mounting frame 614 is arranged to carry a respective transducer (431.1 shown in figure 5) that drives the rotatable arm 612 to move the head 318 in the xz-plane about a respective axis 616 that is parallel to the xy-plane. It can be appreciated that the pedestal link 610 is coupled to the bottom of the pedestal such that rotation of the rotatable arm 612 moves the transducer bearing frame 614 with respect to the pedestal 604.

The transducer bearing frame 614 is also arranged to carry one or more further transducers. In the embodiment shown, the transducer bearing frame 614 is arranged to carry two further transducers 431.2 and 431.3 shown in figure 5. The two further transducers 431.2 and 431.3 are coupled, via respective rotatable arms 618 and 620 and respective links 622 and 624 to a roll actuator bearing frame 626. The roll actuator bearing frame 626 carries a roll actuator 627. Embodiments can be realised in which the roll actuator 627 is a piezoelectric roll actuator. A first link 622 of the respective links 622 and 624 is arranged to rotate the roll actuator bearing frame 626 about a respective axis 628. The respective axis 628 can be parallel to the z axis 106. A second link 624 of the respective links 622 and 624 is arranged to rotate the roll actuator bearing frame 626 about a respective axis 630. The respective axis 630 can be parallel to the y axis 104. In the embodiment illustrated the two axes 616 and 630 can be coplanar within a plane parallel to the xy-plane.

The roll actuator 627 is arranged to carry a sensor mounting frame 632. The roll actuator 627 is arranged to pivot the sensor mounting frame 632 about a roll actuator axis 634. The sensor mounting frame 632 is arranged to carry one or more than one sensor. The one or more than one sensor can comprise at least one or more of a GPS unit 636, one or a number of vision sensors 638 to 642, an inertial measurement unit 644, one or more processors 646 such as, for example, one or more vision processors, an air data sensor and pitot 648 such as, for example, a differential air data sensor and a sensor integration board 650 taken jointly and severally in any and all permutations.

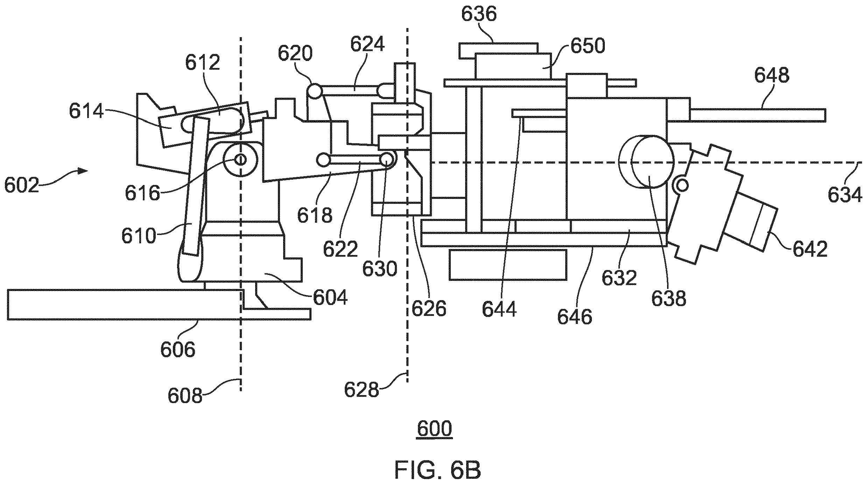

Referring to the rear view 652 of figure 6A and figure 6B, embodiments are provided with a further link 654 that is driven by a respective rotatable arm 656 to rotate the pedestal 604 about the axis 608 by rotation of the rotatable arm 656 about a respective axis 658 via a respective transducer 660.

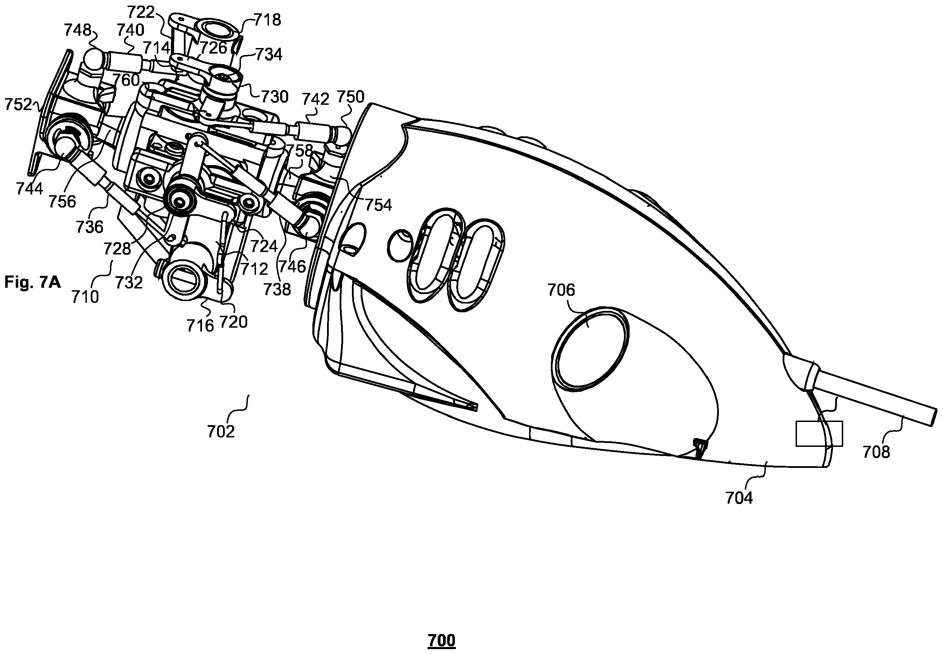

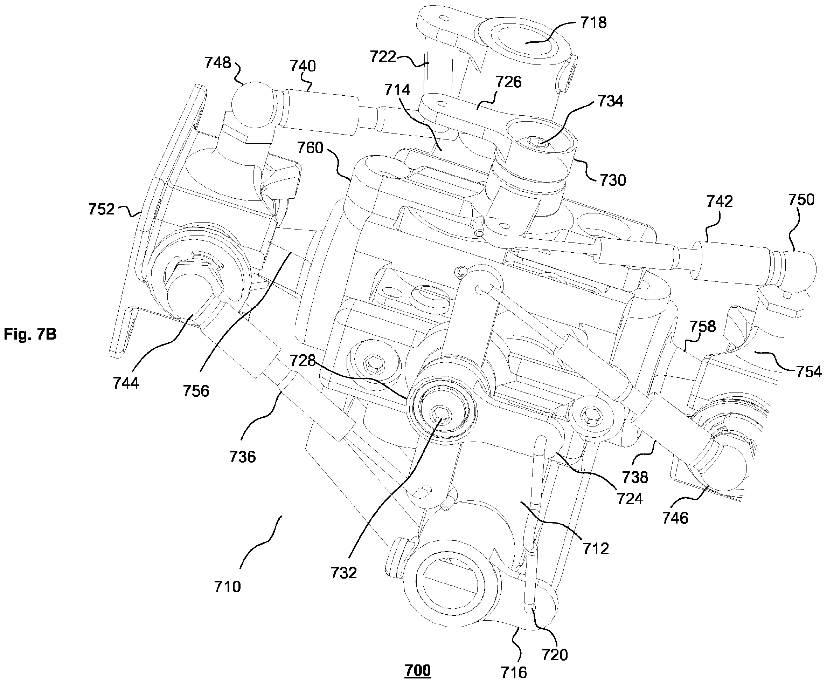

Referring to figures 7A and 7B, there are shown views 700 of a further embodiment of a head 702. The head 702 comprises at least one or more than one of the above described sensors contained within the head housing 704. Smaller sensors are used within the head 702 to allow the head housing 704 to have a smaller form factor.

The head 702 bears a number of external sensors. Embodiments can be realised in which the external sensors comprise at least one or more than one of a vision sensor 706, or other electromagnetic wave sensors, and an air speed sensor and pitot 708. Embodiments can be realised in which a pair of vision sensors, or other electromagnetic wave sensors, are used. The pair of sensors can have at least one or more than one of overlapping fields of view or non-overlapping fields of view and variable fields of view.

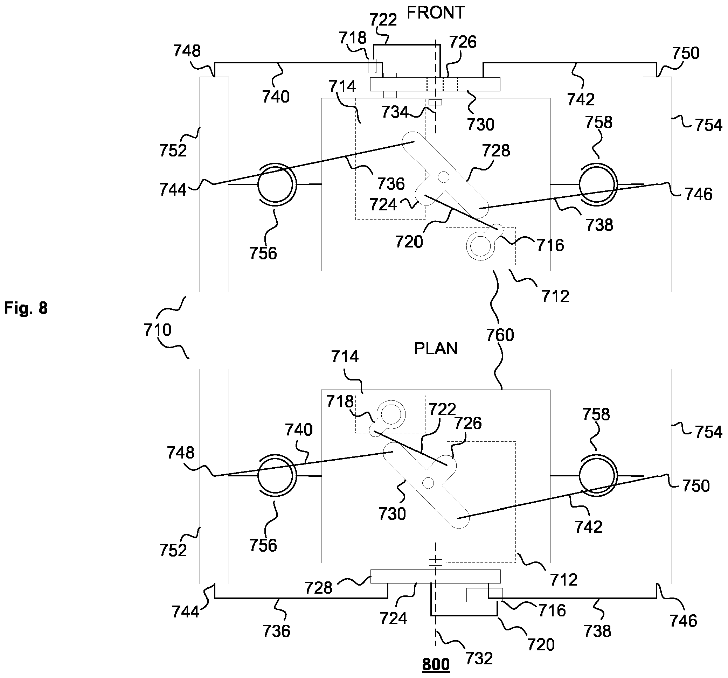

The head 702 comprises a neck 710. The neck 710 comprises a plurality of transducers. In the present embodiment, two transducers 712 and 714 are provided. The transducers 712 and 714 can be mounted such that their respective outputs are orthogonal to one another. The transducers 712 to 714 drive respective arms 716 and 718. The arms 716 and 718 are coupled via respective connectors 720 and 722 to respective link arms 724 and 726. The link arms 724 and 726 form part of respective t-pieces 728 and 730. The t-pieces 728 and 730 can be rotated about respective axes 732 and 734 in response to rotation of the arms 716 and 718. The t-pieces 728 and 730 can be realised as assemblies, as shown in figure 7A and 7B, or as unitary structures, as depicted in figure 8.

The t-pieces 728 and 730 are connected to respective links. It can be appreciated that a first t-piece 728 is connected to respective links 736 and 738. The links 736 and 738, in response to rotation of the first t-piece 728, control or at least influence rotation of the head within a respective plane. The respective plane can be a plane that is parallel to the xy-plane. It can be appreciated that a second t-piece 730 is connected to respective links 740 and 742. The links 740 and 742, in response to rotation of the second t-piece 730, control or at least influence rotation of the head within a respective plane. The respective plane can be a plane that is parallel to the xz-plane.

The links 736, 738, 740, 742 are coupled to respective anchor points 744 to 750 on respective mounting plates 752 and 754. The ends of the links 736 to 742 distal to the anchor points are coupled to the respective t-pieces via hook and eye arrangements, with the links bearing the hooks and the t-pieces having the eyes. The mounting plates 752 and 754 are flexibly coupled, via respective flexible couples 756 and 758, to a transducer bearing frame 760 for carrying the above transducers 712 and 714. Embodiments can be realised in which at least one or both of the couples 756 and 758 have predetermined degrees of freedom such as, for example, two degrees of freedom. The two degrees of freedom can comprise pan and tilt. Embodiments can additionally, or alternatively, restrict or otherwise not provide one or more than one selected degree of freedom such as, for example, a roll. Therefore, embodiments can be realised in which couples 756 and 758 provide pan and tilt but not roll. Embodiments can be realised in which the flexible couples 756 and 758 can be realised via elastically deformable members such as, for example, elongate rubber members or a joint assembly. Embodiments can be realised in which the links 736 to 742 and anchor points 744 to 750 are realised using ball and socket arrangements. Embodiments can be realised in which anchor points or anchor joints can be elastically deformable members. The links 736 to 742 can be adjustable to vary or set a characteristic of the links 736 to 742. Such as characteristic can comprise, for example, the length of a link. The adjustments can be used to bias the head towards or into a predetermined position or attitude.

Figure 8 depicts a schematic view 800 of the neck 702 of figures 7A and 7B. Reference numerals common to figures 7A and 7B and figure 8 refer to the same elements.

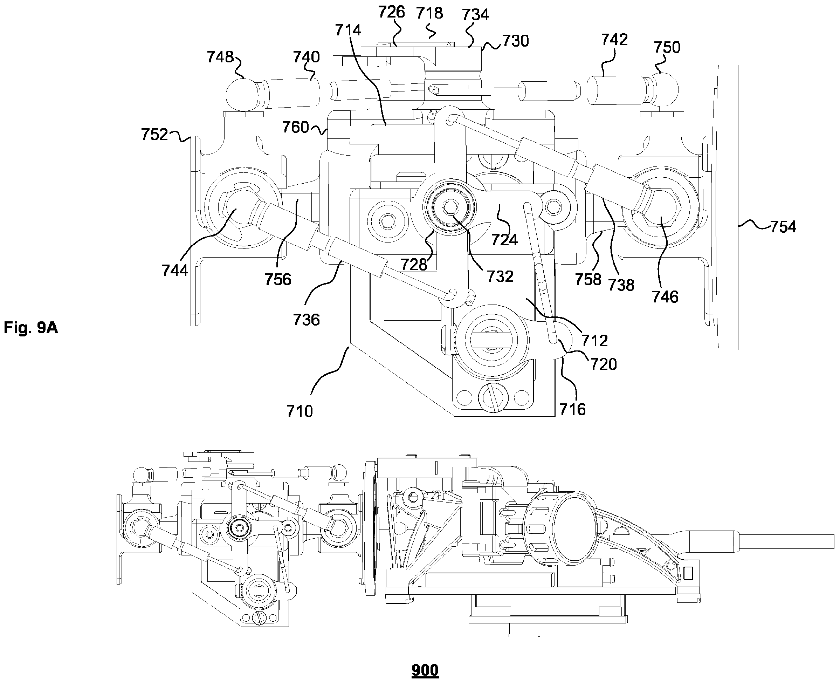

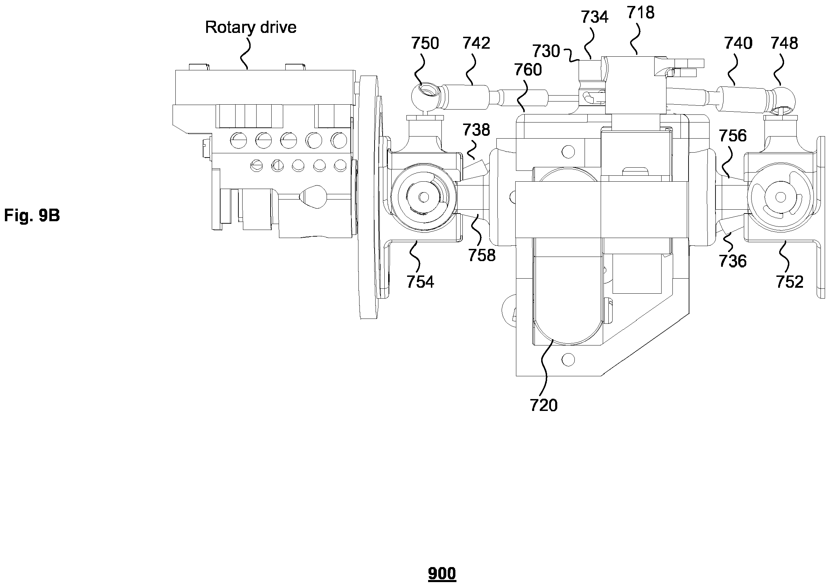

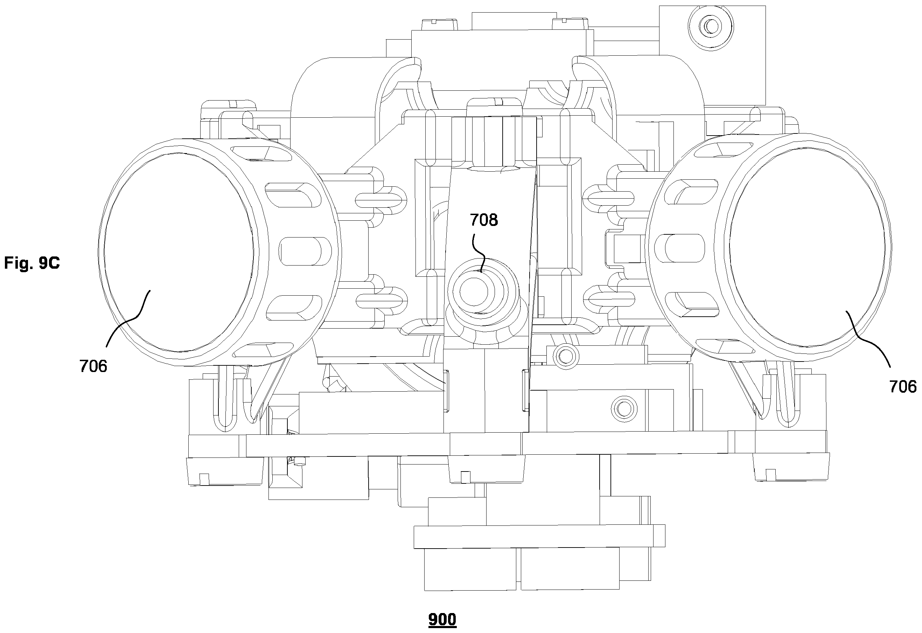

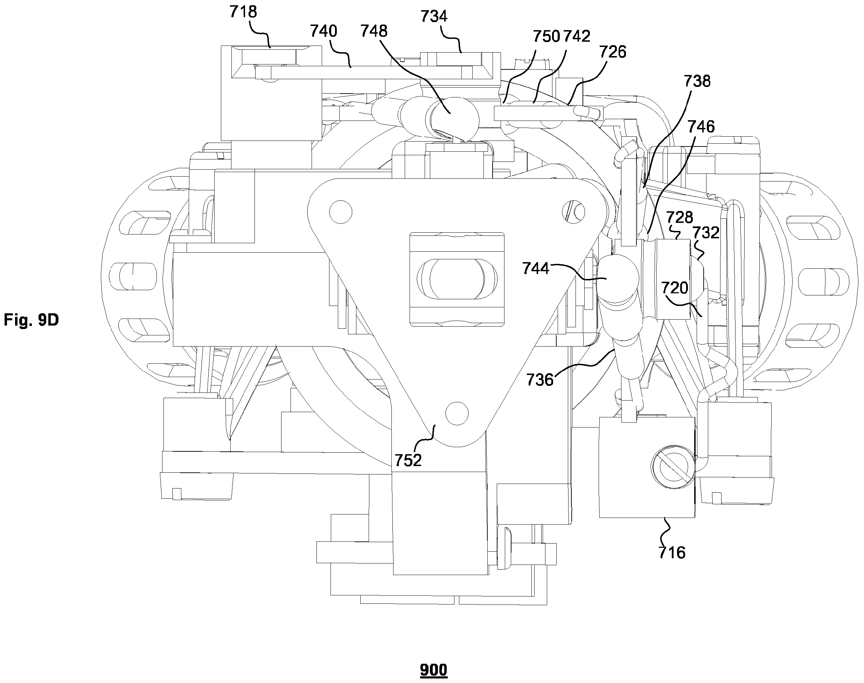

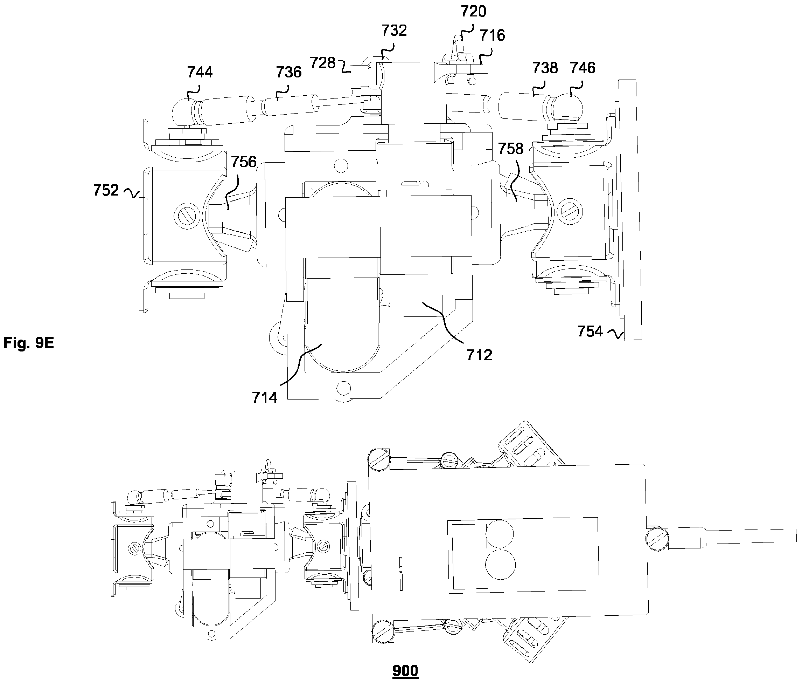

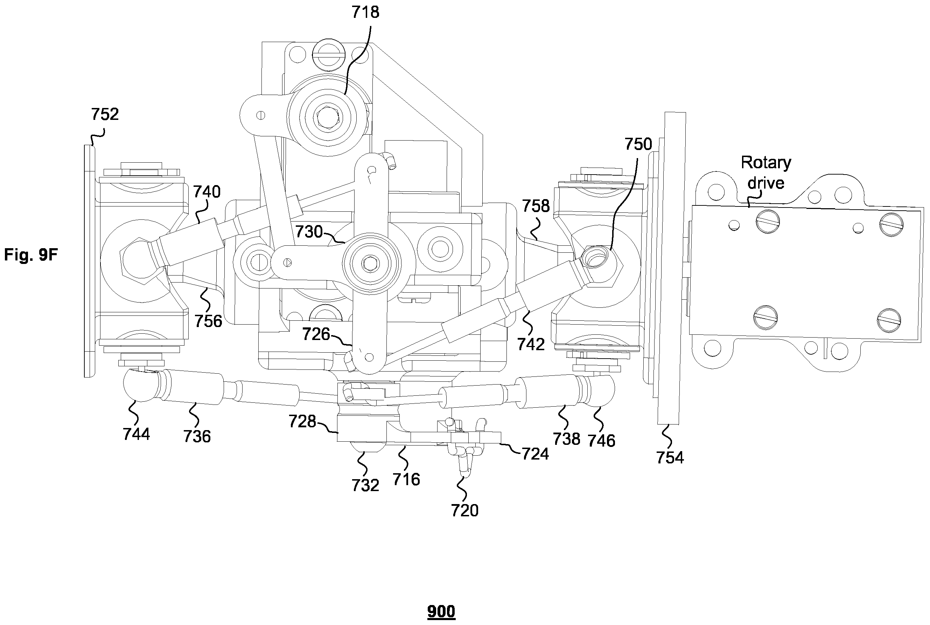

Figures 9A to 9F illustrate views 900 a head and neck assembly according to an embodiment. Reference numerals common to figures 7A and 7B and figure 9 refer to the same elements.

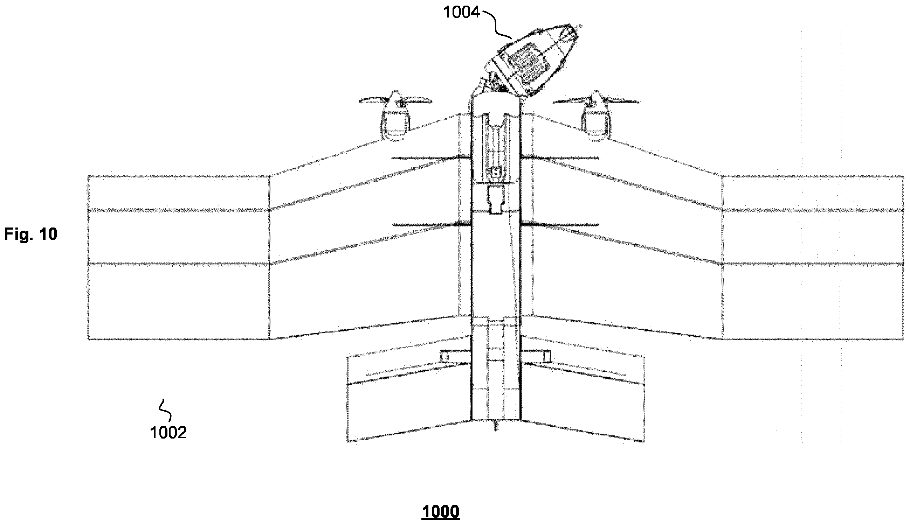

Figure 10 shows an underside view 1000 of a UAV 1002 according to the embodiments. The UAV 10002 comprises a head 1004. The UAV 1002 and head 1004 can be a UAV or head as described above, or in this specification. The head 1004 is shown as being directed leftward. At least one of position and movement of the head 1004 influences the operation or attitude of the UAV, that is, head 1004 is operable as a control surface such that orienting the head 1004 in a given direction steers or otherwise urges the UAV 1002 in that direction.

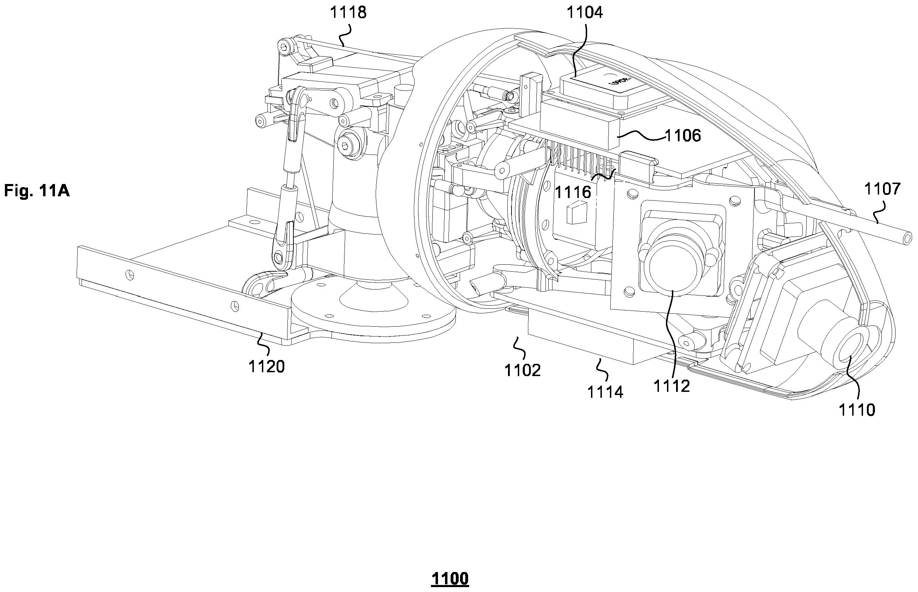

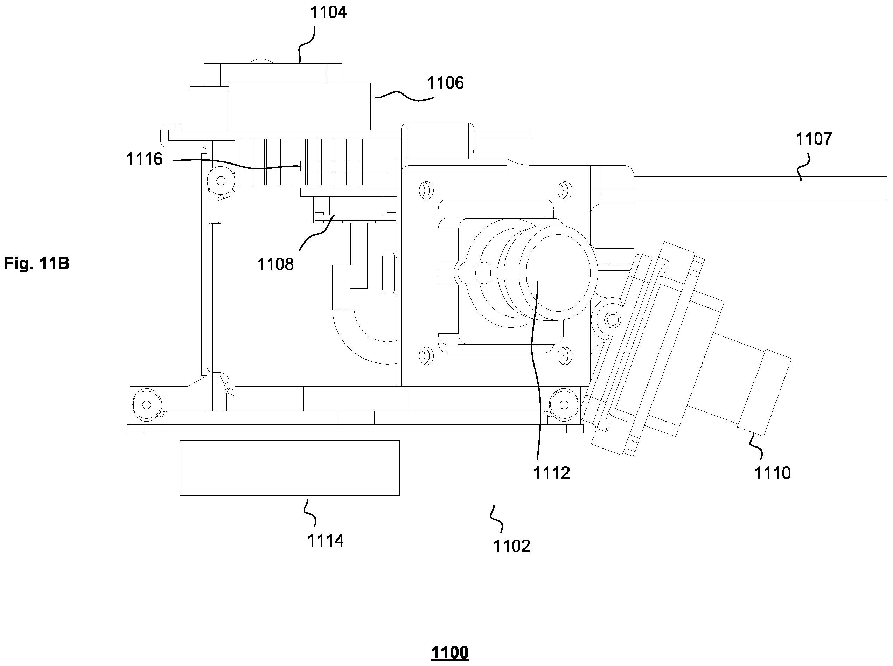

Figures 11A to 11B illustrate views 1100 of an assembled head 1102 according to embodiments. The head carries one or more than one sensor. The sensors can comprise flight control sensors such as, for example, a global positioning system sensor 1104 (GPS) for generating GPS data such as, for example, GPS position data, a sensor integration board 1106, an air speed or air flow sensor 1108, one or more than one vision sensor 1110, 1112, a processor board 1114 bearing one or more than one processor, an IMU 1116, a pitot 1107 an associated with the air speed sensor 1108 that uses differential pressures taken from conduits of the pitot 1107.

An elastically deformable chord 1118 is coupled between the head and a chord anchor such as, for example, a mounting plate 1120, to bias the head towards or into a predetermined position. Embodiments can be realised in which the predetermined position is a straight-forward position in which the longitudinal axis of the head is collinear with, or parallel to, the x axis of the UAV.

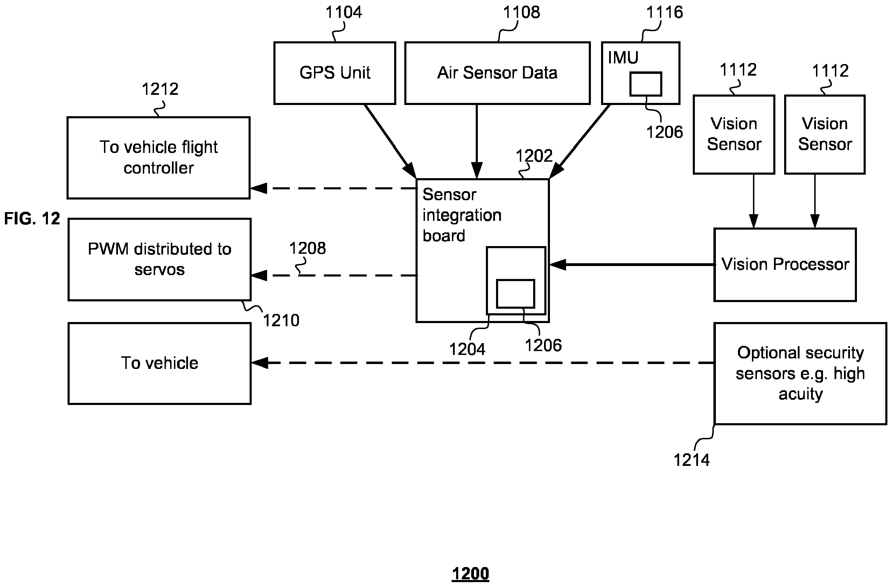

Figure 12 depicts a view 1200 of a sensor integration board 1202 according to embodiments. The sensor integration board 1202 can be an embodiment of any sensor board described in this specification such as, for example, sensor integration board 1106. The sensor integration board 1202 is operatively coupled to, or otherwise interacts with, a plurality of sensors. The plurality of sensors can comprise at least one or more than one of the above described GPS sensor 1104, the pitot 1107, the air speed or air flow sensor 1108, the one or more than one vision sensor 1110, 1112, the processor board 1114 bearing the one or more than one processor, and the IMU 1116. The one or more than one processor can be arranged to process image data derived from the vision sensors 1110 and 1112. Embodiments can also provide an optical sensor 1214 such as, for example, a high acuity sensor.

The sensor integration board 1202 is arranged to process data associated with the at least one or more than one sensor. Embodiments can be realised in which the sensor integration board comprises a processor 1204 arranged to process the data 1206 associated with the at least one or more than one sensor. The data 1206 comprises attitude data derived from, or associated with, the IMU 1116. It will be appreciated that the processor 1204 and sensor integration board 1202 are embodiments of a vehicle stabilization system that is arranged to control the transducers in the neck to maintain a target or desired head attitude. The target or desired head attitude can be maintained in a manner that is decoupled from, or notwithstanding, variations in the vehicle's body attitude. The sensor integration board is arranged to forward data associated with, or directed to, the vehicle's flight controller 1212 for use in controlling the operation of the vehicle. It will be appreciated that such attitude data 1206 will vary as the vehicle manoeuvres. For example, vehicle manoeuvres that induce vibrations, such vibrations can adversely affect the data output by the IMU 1116. Alternatively, or additionally, an initial bias or setting of the IMU gyroscopes or accelerometers might be adversely affect by temperature and/or mechanical stress on the system. For example, IMU sensors such as, for example, gyroscopes or accelerometers, can be subject to a change in bias stemming from how one or more than on sensors of the IMU sensors experiences acceleration. Such a change in bias can occur, for example, is a Micro Electro Mechanical System (MEMS) gyroscope experiences acceleration in the direction of the gyroscope axis. The at least one or more than one processor, or a separate processor such as, for example, a sensor integration board processor 1204, is arranged to process the attitude data 1206 to determine whether or not, and, if so, what, control signals 1208 could be output to the various transducers associated with the above necks to change the attitude of the head relative to the body to maintain the head in, or substantially in, a stable position relative to an external or world coordinate system. In essence, the attitude data derived from the IMU 1116 is used to maintain a constant or substantially constant head attitude notwithstanding changes in the overall attitude of the vehicle.

Although the flight controller or flight control system and vehicle stabilisation system have been described distinctly, embodiments can be realised in which the flight control system and the vehicle stabilisation system are realised using the same hardware and software, that is, they can be realised as distinct, separate, entities or realised using common entities.

Embodiments can be realised in which the control signals 1208 are arranged to implement complementary or inverse operations to those changes or variations sensed by the IMU 1116.

Embodiments can be realised in which the data associated with the IMU 1116 carried by the head is used in conjunction with data associated with a further IMU (not shown) carried by the body. The data from the two IMUs could be processed by the processor 1206 to produce suitable control signals 1208 for use in maintaining head attitude. For example, one or more than one embodiment described herein can use sensors carried by the vehicle body for a predetermined or respective flight envelope for flight control and sensors carried by the stabilised head for a further flight envelope that involves more extreme angles and/or manoeuvring rates. Accordingly, the weight or influence given by the flight controller 1212 to data produced by one or more than one body based sensor and one or more than one stabilised sensor can be arranged to vary with variations in at least one or more than one of vehicle attitude, demand, manoeuvring rates and neck position taken jointly and severally in any and all combinations. Embodiments can use Pulse Width Modulation (PWM) signals as control signals for controlling the transducers.

As used herein, maintaining head attitude comprises maintaining a predetermined or target head attitude or maintaining a predetermined or target head attitude to within predetermined tolerances.

The control signals 1208 are distributed to the various transducers using a servo distribution board 1210.

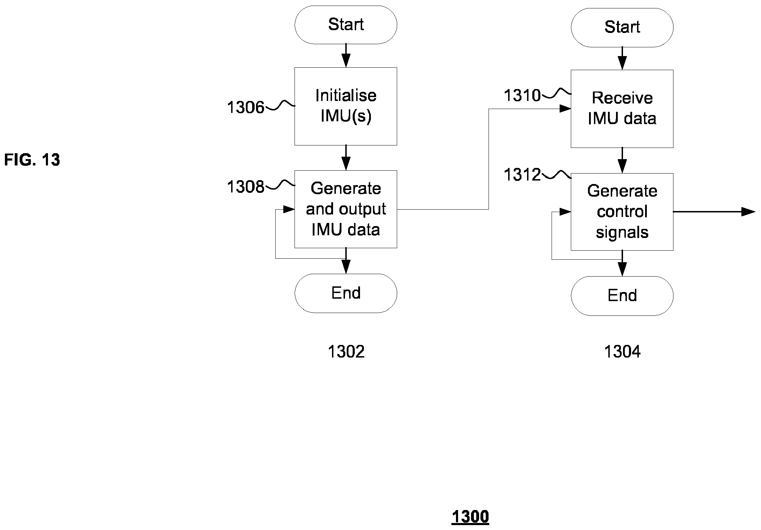

Figure 13 depicts a view 1300 of first 1302 and second 1304 flowcharts. The first flowchart is associated with the operation of the IMU or IMUs, in the case where multiple IMUs are used. The IMU 1116 is initialized at 1306. At 1308, the IMU 1116 is arranged to generate and output IMU data associated with the attitude of a respective head. The IMU data 1206 is output to the processor 1204. Referring to the second flowchart 1304, the processor 1204 receives the IMU data at 1310 and generates, at 1312, control signals, or data from which such control signals can be derived, for controlling the transducers to maintain head attitude. The IMU data can be produced by a single IMU such as the above described IMU 1116, or the IMU data can be produced by multiple IMUs such as, for example, one carried by the head and one carried by the body.

The processing depicted in the flowcharts can be realised using associated software or hardware, or a combination of software or hardware. Software is an embodiment of machine readable/executable instruction. It will be appreciated that the flow charts of figure 13 are embodiments of measuring, using one or more than one sensor housed within a head, a characteristic associated with the vehicle. Similarly, it can be appreciated that outputting control signals, or data from which such control signals can be derived, for controlling the transducers to maintain head attitude is an embodiment of controlling a first stabilization mechanism of the neck, using the vehicle control system, to maintain a head attitude. Such maintaining a head attitude can be decoupled from, or be realised independently of, variations in body attitude.

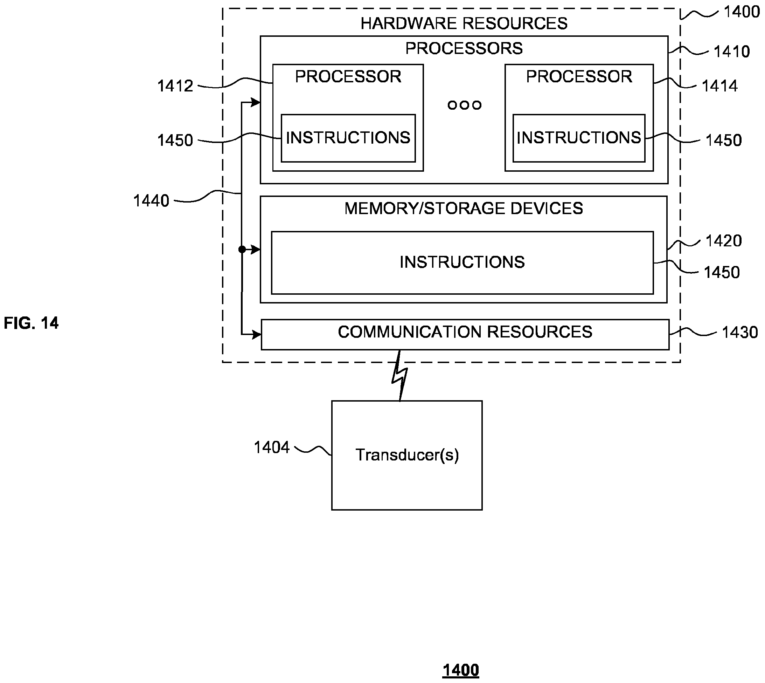

Figure 14 is a block diagram illustrating components able to read instructions from a machine-readable or computer-readable medium (e.g., a machine-readable storage medium) and perform any one or more of the methodologies discussed herein. Specifically, figure 14 shows a diagrammatic representation of hardware resources 1400 including one or more processors (or processor cores) 1410, one or more memory/storage devices 1420, and one or more communication resources 1430, each of which are communicatively coupled via a bus 1440 that can be used to realise for example, the sensor integration board or flight control system.

The processors 1410 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1412 and a processor 1414. The memory/storage devices 1420 may include main memory, disk storage, or any suitable combination thereof.

The communication resources 1430 may include interconnection and/or network interface components or other suitable devices to communicate with one or more peripheral devices 1404 and/or one or more databases 1406 via a network 1408. For example, the communication resources 1430 may include wired communication components (e.g., for coupling via a Universal Serial Bus (USB)), cellular communication components, Near Field Communication (NFC) components, Bluetooth® components (e.g., Bluetooth® Low Energy), Wi-Fi® components, and other communication components.

Instructions 1450 may comprise software, a program, an application, an applet, an app, or other executable code for causing at least any of the processors 1410 to perform any one or more of the methodologies discussed herein. The instructions 1450 may reside, completely or partially, within at least one of the processors 1410 (e.g., within the processor's cache memory), the memory/storage devices 1420, or any suitable combination thereof. Furthermore, any portion of the instructions 1450 may be transferred to the hardware resources 1400 from any combination of the peripheral devices 1404 and/or the databases 1406. Accordingly, the memory of processors 1410, the memory/storage devices 1420, the peripheral devices 1404, and the databases 1406 are examples of computer-readable and machine-readable media.

## Claims

1. A method for controlling a vehicle comprising a body, a neck, a head (318) and a vehicle control system; in which the body comprises vehicle control planes/vehicle control actuators for influencing vehicle movement; the vehicle control actuators being responsive to the vehicle control system, the method comprising
a. measuring, using one or more than one sensor housed within the head, a characteristic associated with the vehicle, the vehicle control system being responsive to the one or more than one sensor, and
b. controlling a first stabilisation mechanism of the neck (418), using a vehicle stabilisation system responsive to the one or more than one sensor, to maintain a head attitude decoupled from, or independently of, variations in body attitude.

2. The method of claim 1, in which controlling said first stabilisation mechanism comprises providing at least three degrees of freedom.

3. The method of claim 2, in which the at least three degrees of freedom comprise at least one linear translation.

4. The method of any preceding claim, in which the neck comprises a second stabilisation mechanism serially coupled with the first stabilisation mechanism between the head and the body, and wherein the method further comprises actuating, using the vehicle control system, the first and second stabilisation mechanisms in at least one of a complementary or cooperative manner.

5. The method of any preceding claim, comprising actuating, in response to the vehicle control system, the stabilisation mechanism in a complementary/opposite manner relative to variations in body attitude.

6. The method of any preceding claim, in which the measuring, using the one or more than one sensor, a characteristic associated with the vehicle comprises at least one of
a. determining, using a GPS sensor, GPS position data,
b. determining, using a speed sensor, speed data (air speed, ground speed),
c. determining, using an inertial measurement unit, inertial measurement data, and/or
d. determining, using a vision based sensor, state relative to the environment

7. The method of claim 6, in which the one or more sensor is the GPS sensor; the GPS sensor having a field of view within which one or more than one GPS signal can be received for determining GPS position data, the method comprising controlling the direction of the field of view.

8. The method of claim 7, comprising controlling the direction of the field of view to maintain receiving of a predetermined number of GPS signals or moving the head into the head attitude from a current attitude (look) prior to maintaining the head in the head attitude.

9. A machine executable program comprising instructions arranged, when executed, to implement a method of any preceding claim.

10. A vehicle comprising a body, a neck (418), a head (318) and a vehicle control system; in which the body comprises vehicle control planes/vehicle control actuators for influencing vehicle movement; the vehicle control actuators being responsive to the vehicle control system, the head comprises one or more than one sensor for measuring a characteristic associated with the vehicle, the vehicle control system being responsive to the one or more than one sensor, the neck (418) is coupled between the body and the head in which the neck comprises a first stabilisation mechanism arranged, responsive to a vehicle stabilisation system responsive to the one or more than one sensor, to maintain a head attitude decoupled from or independently of variations in body attitude.

11. The vehicle of claim 10, in which the first stabilisation mechanisms arranged to provide at least three degrees of freedom, comprising one or more than one of pan, tilt and roll.

12. The vehicle of claims 11, in which the at least three degrees of freedom comprise at least one linear translation, and wherein the at least one linear translation comprises a pair of orthogonal linear translations.

13. The vehicle of any of claims 10 to 12, in which the neck comprises a second stabilisation mechanism serially coupled with the first stabilisation mechanism between the head and the body, and wherein the vehicle control system is arranged to actuate the first and second stabilisation mechanisms in at least one of a complementary or cooperative manner.

14. The vehicle of claim 13, in which the vehicle control system is arranged to actuate the first and second stabilisation mechanisms in a complementary manner to realise at least one of a first linear translation and a second linear translation or in a cooperative manner to realise at least one of pan, title and roll.

15. The vehicle of any of claims 10 to 14, in which the vehicle control system is arranged to actuate the stabilisation mechanism in a complementary/opposite manner relative to variations in body attitude.

## Patentansprüche

1. Verfahren zum Steuern eines Fahrzeugs, umfassend einen Rumpf, einen Hals, einen Kopf (318) und ein Fahrzeugsteuersystem; bei dem der Rumpf Fahrzeugsteuerebenen/Fahrzeugsteuerstellorgane zur Beeinflussung der Fahrzeugbewegung umfasst; wobei die Fahrzeugsteuerstellorgane auf das Fahrzeugsteuersystem ansprechen, wobei das Verfahren umfasst
a. Messen eines mit dem Fahrzeug verbundenen Merkmals unter Verwendung von einem oder mehr als einem im Kopf untergebrachten Sensor, wobei das Fahrzeugsteuersystem auf den einen oder mehr als einen Sensor anspricht, und
b. Steuern eines ersten Stabilisierungsmechanismus des Halses (418) unter Verwendung eines Fahrzeugstabilisierungssystems, das auf den einen oder mehr als einen Sensor anspricht, um eine Kopffluglage aufrechtzuerhalten, die von Variationen in der Rumpffluglage entkoppelt oder von diesen unabhängig ist.

2. Verfahren nach Anspruch 1, bei dem das Steuern des ersten Stabilisierungsmechanismus das Bereitstellen von mindestens drei Freiheitsgraden umfasst.

3. Verfahren nach Anspruch 2, bei dem die mindestens drei Freiheitsgrade mindestens eine lineare Translation umfassen.

4. Verfahren nach einem der vorhergehenden Ansprüche, bei dem der Hals einen zweiten Stabilisierungsmechanismus umfasst, der in Reihe mit dem ersten Stabilisierungsmechanismus zwischen dem Kopf und dem Rumpf gekoppelt ist, und wobei das Verfahren ferner das Betätigen des ersten und des zweiten Stabilisierungsmechanismus, unter Verwendung des Fahrzeugsteuersystems, in mindestens einer ergänzenden oder kooperativen Weise umfasst.

5. Verfahren nach einem der vorhergehenden Ansprüche, umfassend das Betätigen des Stabilisierungsmechanismus, als Reaktion auf das Fahrzeugsteuersystem, in ergänzender/entgegengesetzter Weise in Bezug auf Variationen in der Rumpffluglage.

6. Verfahren nach einem der vorhergehenden Ansprüche, bei dem die Messung, unter Verwendung des einen oder mehr als einen Sensors, eines mit dem Fahrzeug verbundenen Merkmals mindestens eines von folgenden umfasst
a. Bestimmen von GPS-Positionsdaten unter Verwendung eines GPS-Sensors,
b. Bestimmen von Geschwindigkeitsdaten (Luftgeschwindigkeit, Fahrgeschwindigkeit) unter Verwendung eines Geschwindigkeitssensors,
c. Bestimmen, unter Verwendung einer Trägheitsmesseinheit, von Trägheitsmessdaten und/oder
d. Bestimmen der Lage in Bezug auf die Umgebung unter Verwendung eines visuellen Sensors.

7. Verfahren nach Anspruch 6, bei dem der eine oder mehr als eine Sensor der GPS-Sensor ist; wobei der GPS-Sensor ein Sichtfeld aufweist, in dem ein oder mehr als ein GPS-Signal zum Bestimmen von GPS-Positionsdaten empfangen werden kann, wobei das Verfahren das Steuern der Richtung des Sichtfelds umfasst.

8. Verfahren nach Anspruch 7, umfassend das Steuern der Richtung des Sichtfelds, um das Empfangen einer vorbestimmten Anzahl von GPS-Signalen aufrechtzuerhalten, oder das Bewegen des Kopfes aus einer aktuellen Fluglage (Sehen) in die Kopfluglage, bevor der Kopf in der Kopffluglage gehalten wird.

9. Maschinenausführbares Programm, umfassend das Anweisungen, die so angeordnet sind, dass, wenn sie ausgeführt werden, sie ein Verfahren nach einem der vorhergehenden Ansprüche implementieren.

10. Fahrzeug, umfassend einen Rumpf, einen Hals (418), einen Kopf (318) und ein Fahrzeugsteuersystem; bei dem der Rumpf Fahrzeugsteuerebenen/Fahrzeugsteuerstellorgane zur Beeinflussung der Fahrzeugbewegung umfasst; wobei die Fahrzeugsteuerstellorgane auf das Fahrzeugsteuersystem ansprechen, der Kopf einen oder mehr als einen Sensor zum Messen eines mit dem Fahrzeug verbundenen Merkmals umfasst, das Fahrzeugsteuersystem auf den einen oder die mehr als einen Sensor anspricht, der Hals (418) zwischen dem Rumpf und dem Kopf gekoppelt ist, bei dem der Hals einen ersten Stabilisierungsmechanismus umfasst, der ansprechend auf ein Fahrzeugstabilisierungssystem, das auf den einen oder mehr als einen Sensor anspricht, angeordnet ist, um eine von Variationen in der Rumpffluglage entkoppelte oder von diesen unabhängige Kopffluglage aufrechtzuerhalten.

11. Fahrzeug nach Anspruch 10, bei dem die ersten Stabilisierungsmechanismen angeordnet sind, um mindestens drei Freiheitsgrade bereitzustellen, die einen oder mehr als einen von Schwenken, Neigen und Rollen umfassen.

12. Fahrzeug nach Anspruch 11, bei dem die mindestens drei Freiheitsgrade mindestens eine lineare Translation umfassen und wobei die mindestens eine lineare Translation ein Paar orthogonale lineare Translationen umfasst.

13. Fahrzeug nach einem der Ansprüche 10 bis 12, bei dem der Hals einen zweiten Stabilisierungsmechanismus umfasst, der in Reihe mit dem ersten Stabilisierungsmechanismus zwischen dem Kopf und dem Rumpf gekoppelt ist, und wobei das Fahrzeugsteuersystem so angeordnet ist, dass es den ersten und zweiten Stabilisierungsmechanismus in mindestens einer von einer ergänzenden oder kooperative Weise betätigt.

14. Fahrzeug nach Anspruch 13, bei dem das Fahrzeugsteuersystem so angeordnet ist, dass es den ersten und den zweiten Stabilisierungsmechanismus in einer ergänzenden Weise, um mindestens eine von einer ersten linearen Translation und einer zweiten lineare Translation auszuführen, oder in einer kooperativen Weise, um mindestens eines von Schwenken, Neigen und Rollen auszuführen, betätigt.

15. Fahrzeug nach einem der Ansprüche 10 bis 14, bei dem das Fahrzeugsteuersystem so angeordnet ist, dass es den Stabilisierungsmechanismus in Bezug auf Variationen in der Rumpffluglage in einer ergänzenden/entgegengesetzten Weise betätigt.

## Revendications

1. Procédé de commande d'un véhicule comprenant un corps, un col, une tête (318) et un système de commande de véhicule ; ledit corps comprenant des plans de commande de véhicule/actionneurs de commande de véhicule pour influencer le mouvement du véhicule ; les actionneurs de commande de véhicule étant sensibles au système de commande de véhicule, le procédé comprenant
a. la mesure, à l'aide d'un ou plusieurs capteurs logés dans la tête, d'une caractéristique associée au véhicule, le système de commande du véhicule étant sensible auxdits un ou plusieurs capteurs, et
b. la commande d'un premier mécanisme de stabilisation du col (418), à l'aide d'un système de stabilisation de véhicule sensible auxdits un ou plusieurs capteurs, pour maintenir une attitude de tête découplée ou indépendante des variations d'attitude du corps.

2. Procédé selon la revendication 1, ladite commande dudit premier mécanisme de stabilisation comprenant la fourniture d'au moins trois degrés de liberté.

3. Procédé selon la revendication 2, dans lequel lesdits au moins trois degrés de liberté comprennent au moins une translation linéaire.

4. Procédé selon l'une quelconque des revendications précédentes, dans lequel le col comprend un second mécanisme de stabilisation couplé en série au premier mécanisme de stabilisation entre la tête et le corps, et ledit procédé comprenant en outre l'actionnement, à l'aide du système de commande de véhicule, des premier et second mécanismes de stabilisation d'au moins une manière parmi une manière complémentaire ou une manière coopérative.

5. Procédé selon l'une quelconque des revendications précédentes, comprenant l'actionnement, en réponse au système de commande de véhicule, du mécanisme de stabilisation d'une manière complémentaire/opposée par rapport aux variations d'attitude du corps.

6. Procédé selon l'une quelconque des revendications précédentes, dans lequel la mesure, à l'aide d'un ou plusieurs capteurs, d'une caractéristique associée au véhicule comprend au moins une détermination parmi
a. la détermination, à l'aide d'un capteur GPS, de données de position GPS,
b. la détermination, à l'aide d'un capteur de vitesse, de données de vitesse (vitesse aérodynamique, vitesse au sol),
c. la détermination, à l'aide d'une unité de mesure inertielle, de données de mesure inertielle, et/ou
d. la détermination, à l'aide d'un capteur basé sur la vision, de l'état par rapport à l'environnement.

7. Procédé selon la revendication 6, lesdits un ou plusieurs capteurs étant le capteur GPS; le capteur GPS ayant un champ de vision dans lequel un ou plusieurs signaux GPS peuvent être reçus pour déterminer des données de position GPS, le procédé comprenant le contrôle de la direction du champ de vision.

8. Procédé selon la revendication 7, comprenant la commande de la direction du champ de vision pour maintenir la réception d'un nombre prédéterminé de signaux GPS ou le déplacement de la tête dans l'attitude de la tête à partir d'une attitude courante (regard) avant de maintenir la tête dans l'attitude de tête.

9. Programme exécutable par machine comprenant des instructions conçues, lorsqu'elles sont exécutées, pour mettre en œuvre un procédé selon l'une quelconque des revendications précédentes.

10. Véhicule comprenant un corps, un col (418), une tête (318) et un système de commande de véhicule ; dans lequel le corps comprend des plans de commande de véhicule/actionneurs de commande de véhicule pour influencer le mouvement du véhicule; les actionneurs de commande de véhicule étant sensibles au système de commande de véhicule, la tête comprend un ou plusieurs capteurs pour mesurer une caractéristique associée au véhicule, le système de commande de véhicule étant sensible à un ou plusieurs capteurs, le col (418) est couplé entre le corps et la tête dans lequel le col comprend un premier mécanisme de stabilisation conçu, en réponse à un système de stabilisation de véhicule sensible à un ou plusieurs capteurs, pour maintenir une attitude de tête découplée ou indépendamment des variations de l'attitude du corps.

11. Véhicule selon la revendication 10, dans lequel les premiers mécanismes de stabilisation sont conçus pour fournir au moins trois degrés de liberté, comprenant un ou plusieurs parmi le pivotement, l'inclinaison et le roulis.

12. Véhicule selon la revendication 11, dans lequel lesdits au moins trois degrés de liberté comprennent au moins une translation linéaire, et ladite au moins une translation linéaire comprenant deux translations linéaires orthogonales.

13. Véhicule selon l'une quelconque des revendications 10 à 12, dans lequel le col comprend un second mécanisme de stabilisation couplé en série au premier mécanisme de stabilisation entre la tête et le corps, et ledit système de commande du véhicule étant conçu pour actionner les premier et second mécanismes de stabilisation d'au moins une manière parmi une manière complémentaire ou une manière coopérative.

14. Véhicule selon la revendication 13, dans lequel le système de commande de véhicule est conçu pour actionner les premier et second mécanismes de stabilisation d'une manière complémentaire pour réaliser au moins l'une parmi une première translation linéaire et une seconde translation linéaire ou de manière coopérative pour réaliser au moins l'un d'un pivotement, d'une inclinaison et d'un roulis.

15. Véhicule selon l'une quelconque des revendications 10 à 14, dans lequel le système de commande du véhicule est conçu pour actionner le mécanisme de stabilisation d'une manière complémentaire/opposée par rapport à des variations d'attitude du corps.
